# EUROPÄISCHE PATENTSCHRIFT

(11) **EP 1 571 130 B1**
(45) Veröffentlichungstag und Bekanntmachung des Hinweises auf die Patenterteilung: **18.11.2009**
(21) Anmeldenummer: 05000958.8
(22) Anmeldetag: 19.01.2005
(51) Int. Cl.: C03B 9/453

(54) **Verfahren und Vorrichtung zum Überschieben von Hohlglasgegenständen aus einer Glasformmaschine auf ein Transportband**
Process and apparatus to transfer hollow glass product from a glass forming machine to a conveyor
Procédé et appareil pour transférer des articles de verre creux d'une machine à façonner le verre vers un convoyeur

(30) Priorität: 03.03.2004 DE 102004010238
(43) Veröffentlichungstag der Anmeldung: 07.09.2005
(73) Patentinhaber: Heye International GmbH, 31683 Obernkirchen (DE)
(72) Erfinder: Winkelhake, Dirk, 31688 Nienstädt (DE); Bögert, Hermann, 31749 Auetal (DE); Schwarzer, Siegfried, 31638 Stöckse (DE); Hoffmann, Michael, 31715 Meerbeck (DE)
(74) Vertreter: Sobisch, Peter

(56) Entgegenhaltungen:
- WO-A-2005/085145
- CZ-B- 288 848
- DE-C1- 19 800 080
- US-A- 4 203 752
- US-A- 5 429 651
- US-B1- 6 601 410

## Beschreibung

Die Erfindung betrifft zunächst ein Verfahren gemäß dem Oberbegriff des Anspruchs 1.

Bei einem bekannten Verfahren dieser Art (US 4 203 752 A) wird die gekrümmte Bahn im Wesentlichen durch einen Viertelkreis gebildet. Damit lassen sich die Hohlglasgegenstände bis zu mittleren Geschwindigkeiten des Transportbands von etwa bis zu 60 m/min einwandfrei von der Absetzplatte auf das Transportband überschieben. Es hat sich allerdings gezeigt, dass bei höheren Geschwindigkeiten des Transportbands die Hohlglasbehälter zunehmend schwieriger überzuschieben und in einer Reihe auf dem Transportband zu positionieren sind.

Zur Lösung dieses Problems ist in der DE 198 00 080 C1 vorgeschlagen worden, den Überschieber einschließlich eines Schwenkantriebes, mittels welchem der Überschieber um eine vertikale Achse zwischen einer Position oberhalb einer Absetzplatte und einer Position oberhalb eines Transportbandes schwenkbar ist, auf einem Träger anzubringen, der seinerseits bei jedem Überschiebezyklus einer Linearbewegung parallel zu der Förderrichtung des Transportbands unterliegt. Die Überführungsbewegung des Überschiebers wird somit aus der Überlagerung einer Schwenkbewegung um die genannte vertikale Achse und einer Verschiebebewegung in Richtung der Achse des Transportbands gebildet. Auf diese Weise ergibt sich zwar für den Überschieber eine von einer Kreisbahn abweichende gekrümmte Bahn - im Überführungspunkt oberhalb des Transportbandes, in welchem sich der Überschieber von den Hohlglasgegenständen löst, weist dieser jedoch eine geringfügige Geschwindigkeitskomponente senkrecht zu der Bewegungsrichtung des Transportbandes auf.

Aus der US 5 429 651 A ist es an sich bekannt, mehrere Hohlglasgegenstände in einer Reihe auf der Absetzplatte abzusetzen, wobei diese Reihe einen spitzen Winkel mit der Bewegungsrichtung des Transportbands einschließt. Der Überschieber wird zum Überschieben der Hohlglasgegenstände von der Absetzplatte auf das Transportband um eine Hochachse geschwenkt und gleichzeitig in Richtung der ursprünglichen Behälterreihe linear verschoben. Dies führt zu einem erheblichen baulichen Aufwand und Raumbedarf.

Aus der CZ 288 848 B6 ist es bekannt, dem Überschieber unter Zwischenanordnung von zwei, sich parallel zueinander erstreckenden Kurbelarmen auf einen plattenförmigen Mitnehmer zu lagern, der seinerseits um eine Welle schwenkbar gelagert ist, die sich parallel zu den Achsen der Kurbelarme erstreckt. Die genannte Welle erstreckt sich koaxial innerhalb einer Hohlwelle, die einerseits mit dem plattenartigen Mitnehmer und andererseits mit einer ersten Antriebseinheit in Verbindung steht. Eine zweite Antriebseinheit steht über die genannte Welle unmittelbar mit Zapfen in Verbindung, auf denen die beiden genannten Kurbelarme gelagert sind. Während die zweite Antriebseinheit für einen gleichförmigen Betrieb in einer Umdrehungsrichtung eingerichtet ist, wird über die zweite Antriebseinheit lediglich eine drehend hin- und hergehende Bewegung mit zwischenzeitlichen Stillständen generiert, welche dazu bestimmt ist, den Überschieber zwischen einer Position oberhalb einer Absetzplatte einerseits und eines Transportbandes andererseits zyklisch zu überführen. Wesentlich ist, dass in einem Ablösepunkt, in welchem sich der Überschieber von den Hohlglasgegenständen löst, die erste Antriebseinheit stillsteht, so dass der Überschieber mittels der zweiten Antriebseinheit eine Geschwindigkeit im Wesentlichen senkrecht zur Bewegungsrichtung des Transportbandes erfährt.

Sämtliche der vorstehend dargelegten Konstruktionsvarianten eignen sich nicht oder nur bedingt für höhere Geschwindigkeiten des Transportbandes. Sie sind außerdem zum Teil mit einem beträchtlichen baulichen Aufwand verbunden.

Der Erfindung liegt die Aufgabe zugrunde, die Hohlglasgegenstände auch bei höheren Geschwindigkeiten des Transportbands von z.B. über 60 m/min sicher von der Absetzplatte auf das Transportband überzuschieben und an das Transportband zu übergeben.

Diese Aufgabe ist hinsichtlich des Verfahrens durch die Merkmale des Anspruchs 1 gelöst. Die gekrümmte Bahn kann die Form eines Kreisbogens haben oder bei Bedarf auch vom Kreisbogen abweichen. Durch das an die gekrümmte Bahn anschließende lineare Wegstück zwischen dem Berührungspunkt und dem Lösepunkt werden die Hohlglasgegenstände durch den Überschieber beruhigt und exakt in der Bewegungsrichtung des Transportbands ausgerichtet. Erst im Lösepunkt wird der Überschieber von den übergeschobenen Hohlglasgegenständen entfernt und sodann zu seinem Ausgangspunkt auf der Absetzplatte zurückbewegt.

Die Merkmale des Anspruchs 2 erleichtern eine geordnete Übergabe mehrerer gleichzeitig in der Sektion hergestellter Hohlglasgegenstände an das Transportband.

Die Erfindung betrifft auch eine Vorrichtung nach dem Oberbegriff des Anspruchs 3.

Eine solche Vorrichtung ist aus der CZ 288 848 B6 bekannt. Mit dieser Vorrichtung ist es allerdings nicht möglich, im Anschluss an die gekrümmte Bahn dem Überschieber eine lineare Bewegung in der Bewegungsrichtung des Transportbands zu erteilen. Der Überschieber wird durch ein Paar paralleogrammartig angeordneter Kurbeln getragen. Diese Ausbildung ist baulich aufwändig und beansprucht im Überschiebebereich verhältnismäßig viel Raum.

Die vorerwähnte Aufgabe ist hinsichtlich der Vorrichtung durch die Merkmale des Anspruchs 3 gelöst.

Durch diese besondere Kinematik wird es möglich, die Form der Krümmung der gekrümmten Bahn während des Überschiebens frei zu bestimmen. Dadurch können während des eigentlichen Überschiebevorgangs störende Quer- oder Zentrifugalkräfte auf die überzuschiebenden Hohlglasgegenstände minimal gehalten werden. Am Ende des bogenförmigen Überschiebevorgangs werden schließlich die Hohlglasgegenstände durch den Überschieber noch um ein lineares Wegstück in der Bewegungsrichtung des Transportbands weitergeschoben. Dadurch werden die Hohlglasgegenstände weiter beruhigt und in der Bewegungsrichtung des Transportbands exakt ausgerichtet. Erst dann löst sich der Überschieber von den Hohlglasgegenständen und wird in seine Ausgangsstellung an der Absetzplatte zurückbewegt.

Die Elektroservomotoren gemäß Anspruch 4 lassen sich feinfühlig und vorprogrammierbar unabhängig voneinander steuern. Auf diese Weise kann man jedem Typ der überzuschiebenden Hohlglasgegenstände ein für ihn maßgeschneidertes Bewegungsprofil während des Überschiebens und bis zur endgültigen Abgabe an das Transportband erteilen.

Gemäß Anspruch 5 lassen sich die Getriebe kostengünstig und betrieblich zuverlässig ausbilden.

Durch die Merkmale des Anspruchs 6 lässt sich die Spannung der Zahnriemen auf einfache und sichere Weise auf den optimalen Wert einstellen.

Vorteilhaft ist, dass alle Antriebseinheiten ortsfest unterhalb der Ebene des Transportbands angeordnet werden können. Das führt dazu, dass im heißen Bereich oberhalb des Transportbands sich keine aktiven elektrischen und elektronischen Komponenten befinden. Die Energiezuführung zu den Antriebseinheiten ist dadurch ebenfalls ortsfest, wodurch eventuelle Probleme aufgrund einer beweglichen Energiezuführung vermieden sind. Ferner ist es gelungen, das Transportband auf der Bedienerseite frei zugänglich zu halten. Alle beweglichen Gelenke sind Drehgelenke. Auf diese Weise ist die Vorrichtung sehr robust und verschmutzungsunempfindlich. Alle Abstände zu anderen Komponenten können so ausgelegt werden, dass Scherben zerstörter Hohlglasgegenstände nicht zur Beeinträchtigung der Funktion der Vorrichtung führen.

Diese und weitere Merkmale und Vorteile der Erfindung werden nachfolgend anhand des in den Zeichnungen dargestellten Ausführungsbeispiels näher erläutert. Es zeigt
Fig. 1 ein schematisches Diagramm zum Überschiebeverfahren,
Fig. 2 im Wesentlichen die Schnittansicht nach Linie II-II der Vorrichtung gemäß Fig. 4,
Fig. 3 die Schnittansicht nach Linie III-III in Fig. 2 in vergrößerter Darstellung,
Fig. 4 die Schnittansicht nach Linie IV-IV in Fig. 2,
Fig. 5 die Seitenansicht gemäß Linie V-V in Fig. 2,
Fig. 6 im Wesentlichen die Draufsicht auf die Vorrichtung gemäß Fig. 4 mit einer Bahnkurve der dritten Längsachse der Vorrichtung und
Fig. 7 bis 15 jeweils der Fig. 6 entsprechende Ansichten in aufeinander folgenden Stellungen VII bis XV der dritten Längsachse entlang der Bahnkurve gemäß Fig. 6.

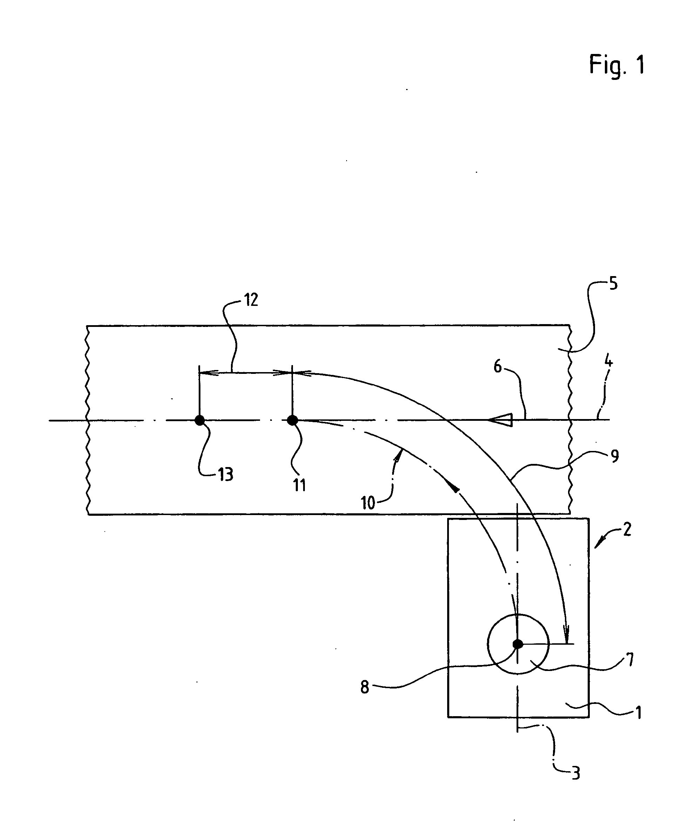

Fig. 1 zeigt eine stationäre Absetzplatte 1 einer nicht weiter dargestellten Sektion 2 einer I.S. (Individual Section) -Glasformmaschine. Die Absetzplatte 1 weist eine Mittellinie 3 auf, die sich rechtwinklig zu einer Mittellinie 4 eines allen Sektionen 2 der Glasformmaschine gemeinsamen Transportbands 5 erstreckt. Das Transportband 5 läuft kontinuierlich in einer Bewegungsrichtung 6.

Auf der Absetzplatte 1 wird periodisch wenigstens ein in der Sektion 2 hergestellter Hohlglasgegenstand 7 abgesetzt. Jeder Hohlglasgegenstand 7 steht dann mit seiner Längsachse in einem Ausgangspunkt 8, wo er durch einen in Fig. 1 nicht gezeichneten Überschieber berührt und längs einer gekrümmten Bahn 9 einer Bahnkurve 10 derart auf das Transportband 5 übergeschoben wird, dass die gekrümmte Bahn 9 tangential an einen Berührungspunkt 11 mit der Bewegungsrichtung 6 des Transportbands 5 herangeführt wird. Jeder Hohlglasgegenstand 7 wird im Anschluss an den Berührungspunkt 11 durch den Überschieber noch um ein lineares Wegstück 12 der Bahnkurve 10 in der Bewegungsrichtung 6 des Transportbands 5 weitergeschoben bis zu einem Lösepunkt 13, in dem der Überschieber von dem wenigstens einen Hohlglasgegenstand 7 gelöst wird. Anschließend wird der Überschieber in später zu beschreibender Weise zu dem Ausgangspunkt 8 auf der Absetzplatte 1 zur Übernahme des nächsten wenigstens einen Hohlglasgegenstands 7 der Sektion 2 zurückbewegt.

In allen Zeichnungsfiguren sind gleiche Teile mit gleichen Bezugszahlen versehen.

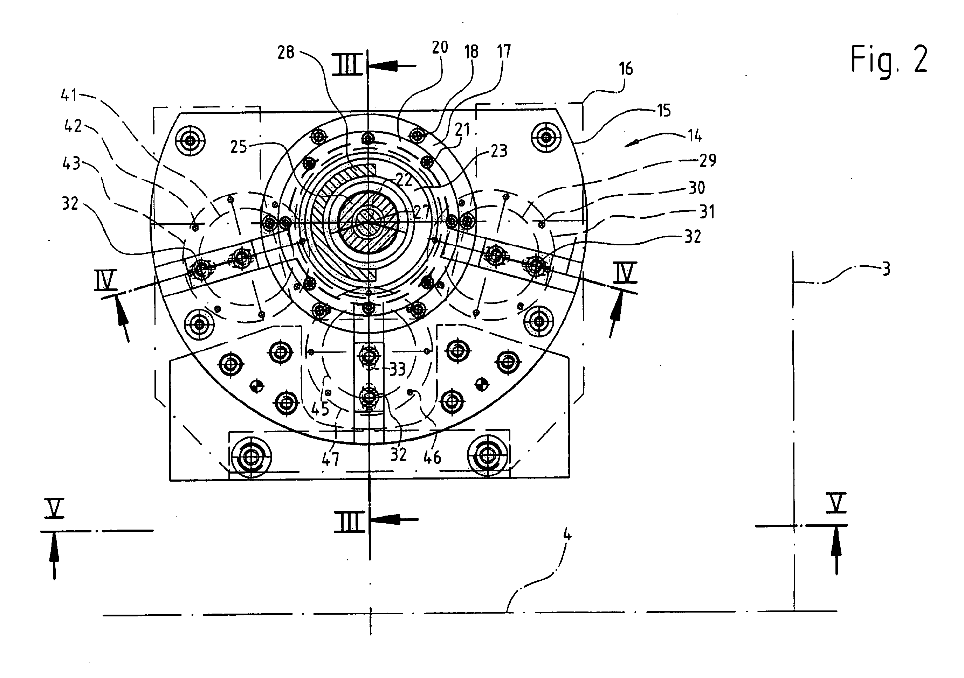

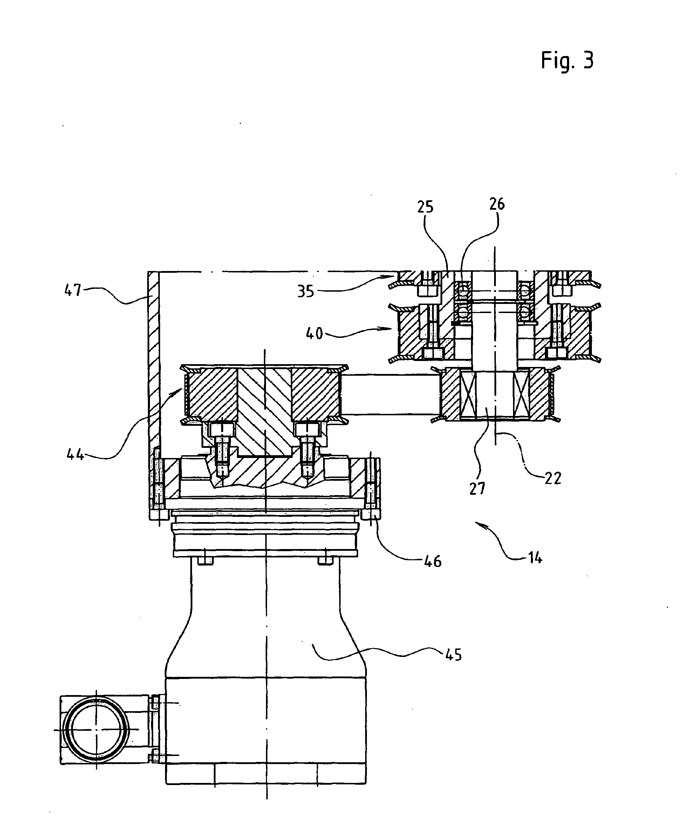

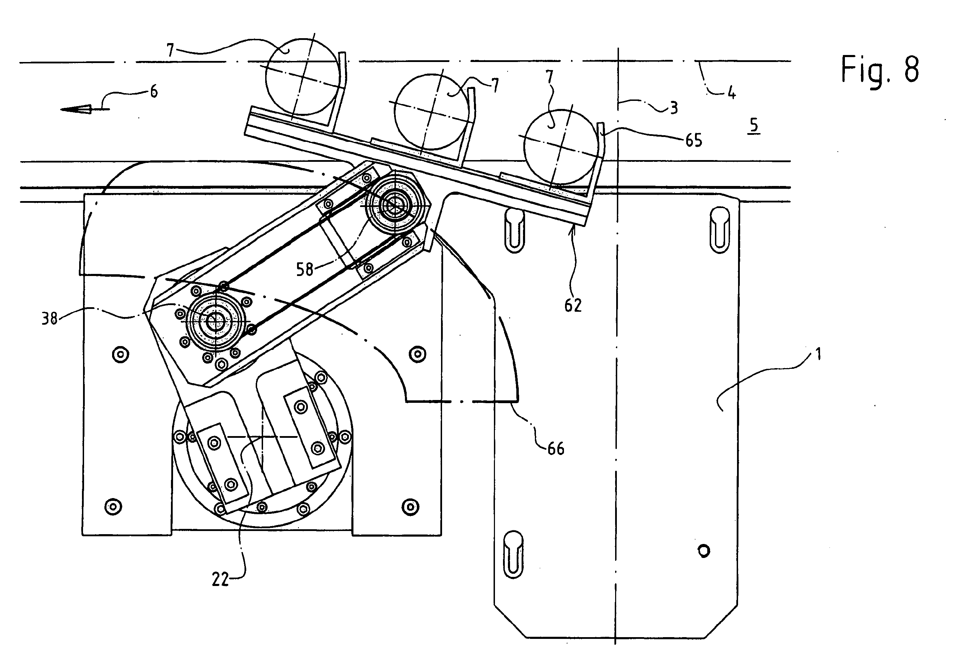

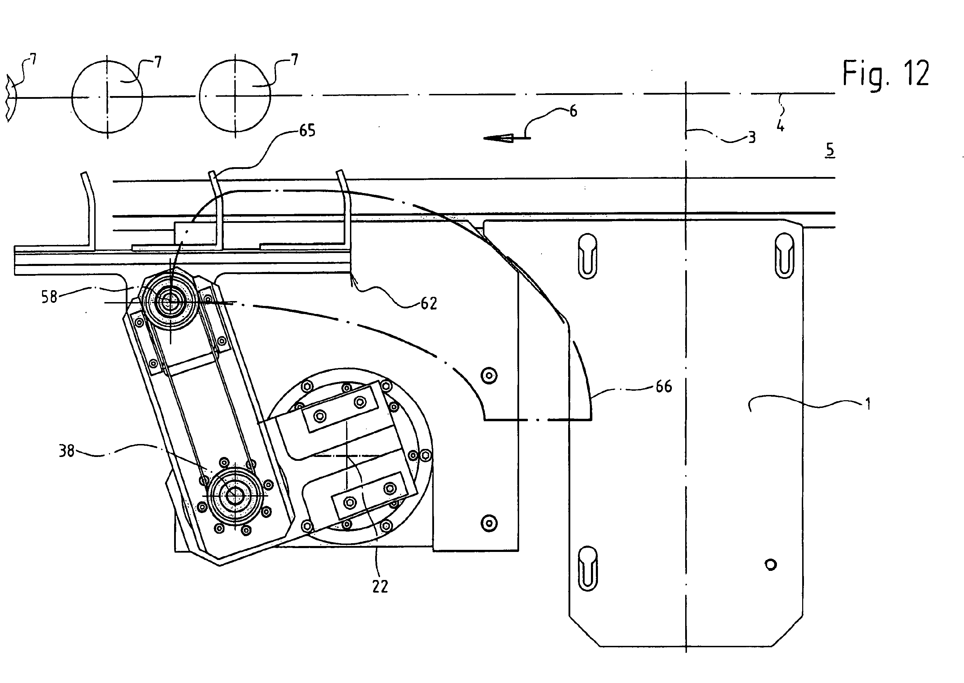

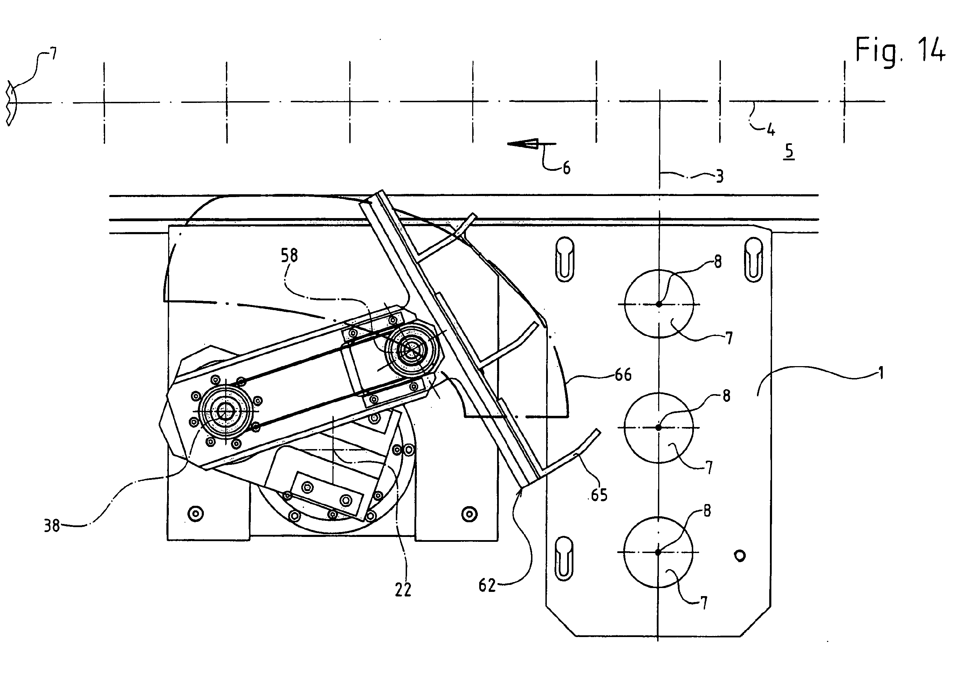

In den Figuren 2 bis 15 ist eine Vorrichtung 14 dargestellt, mit der sich die Bahnkurve 10 der Hohlglasgegenstände 7 gemäß Fig. 1 realisieren lässt.

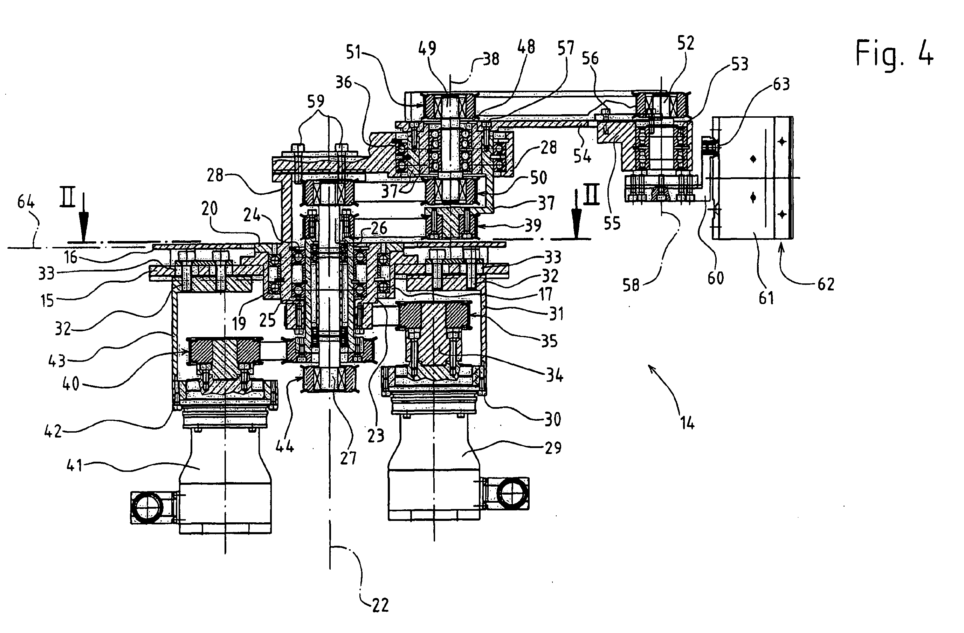

Die Vorrichtung 14 weist gemäß Fig. 2 ein maschinenfest montiertes plattenförmiges Bauteil 15 auf. Oberhalb des Bauteils 15 ist eine in Fig. 2 zur besseren Übersicht nur strichpunktiert eingezeichnete, hufeisenförmige Abdeckplatte 16 angeordnet, die mit dem Bauteil 15 verschraubt ist. In eine zentrale Bohrung des Bauteils 15 ist eine Lagerbuchse 17 eingesetzt und durch Schrauben 18 mit dem Bauteil 15 verschraubt. In die Lagerbuchse 17 sind gemäß Fig. 4 zwei Wälzlager 19 eingesetzt, die oben durch einen Deckring 20 gesichert sind. Gemäß Fig. 2 ist der Deckring 20 durch Schrauben 21 an der Lagerbuchse 17 festgelegt.

Aus einer Zusammenschau der Fig. 2 und 4 ergibt sich, dass in den beiden Wälzlagern 19 eine um eine erste Längsachse 22 schwenkbare erste Hohlwelle 23 schwenkbar gelagert ist. In der ersten Hohlwelle 23 ist über zwei Wälzlager 24 eine dritte Hohlwelle 25 um die erste Längsachse 22 drehbar gelagert. Schließlich ist koaxial zu der dritten Hohlwelle 25 in der dritten Hohlwelle 25 über vier Wälzlager 26 eine vierte Welle 27 drehbar gelagert.

Die erste Hohlwelle 23 trägt ein Gehäuse 28, das sich nach oben hin aus der Abdeckplatte 16 heraus erstreckt.

Eine erste Antriebseinheit 29 ist durch Schrauben 30 unten an einer ersten Halterung befestigt. Die erste Halterung 31 ist ihrerseits mit zwei Schrauben 32 gegen eine Unterseite des Bauteils 15 gezogen. Jede Schraube 32 durchdringt ein Langloch 33 des Bauteils 15, das sich in Richtung der ersten Längsachse 22 erstreckt. Eine Abtriebswelle 34 der ersten Antriebseinheit 29 ist über ein als Zahnriemengetriebe ausgebildetes erstes Getriebe 35 mit der ersten Hohlwelle 23 verbunden.

An dem Gehäuse 28 ist über zwei Wälzlager 36 eine zweite Hohlwelle 37 mit einer zu der ersten Längsachse 22 parallelen zweiten Längsachse 38 drehbar gelagert.

Die zweite Hohlwelle 37 besitzt einen unteren Fortsatz, der über ein als Zahnriemengetriebe ausgebildetes zweites Getriebe 39 durch die dritte Hohlwelle 25 drehend antreibbar ist. Die dritte Hohlwelle 25 wird ihrerseits durch ein als Zahnriemengetriebe ausgebildetes drittes Getriebe 40 durch eine zweite Antriebseinheit 41 drehend angetrieben. Die zweite Antriebseinheit 41 ist durch Schrauben 42 unten an einer zweiten Halterung 43 befestigt. Die zweite Halterung 43 ist in der gleichen Weise wie die erste Halterung 31 über Schrauben 32 und Langlöcher 33 einstellbar an dem Bauteil 15 befestigt.

Aus einer Zusammenschau der Figuren 2 bis 4 ergibt sich, dass die vierte Welle 27 über ein als Zahnriemengetriebe ausgebildetes viertes Getriebe 44 durch eine dritte Antriebseinheit 45 drehend antreibbar ist. Die dritte Antriebseinheit 45 ist durch Schrauben 46 unten an einer dritten Halterung 47 befestigt. Gemäß Fig. 2 ist die dritte Halterung 47 wiederum durch Schrauben 32 und zugehörige Langlöcher 33 einstellbar an dem Bauteil 15 festgelegt.

Wenn bei jeder der drei Antriebseinheiten 29, 41, 45 die Spannung des Zahnriemens des zugehörigen Getriebes 35, 40, 44 eingestellt werden soll, werden die zugehörigen beiden Schrauben 32 gelockert und die zugehörige Halterung 31, 43, 47 bezüglich der ersten Längsachse 22 radial nach außen verschoben, bis die gewünschte Riemenspannung erreicht ist. Sodann werden die beiden Schrauben 32 wieder festgezogen.

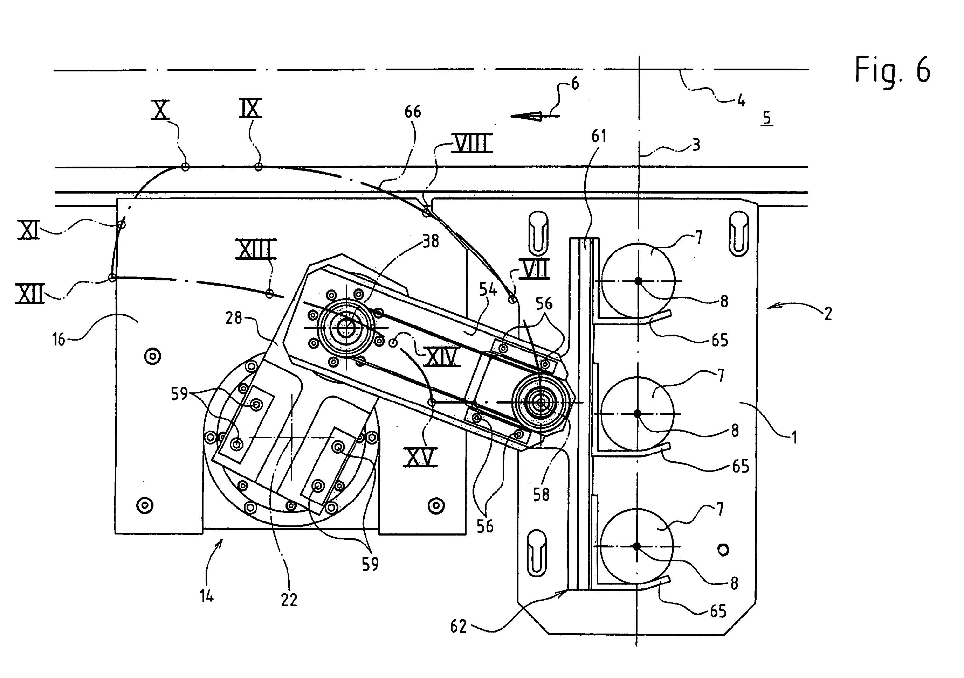

Gemäß Fig. 4 ist innerhalb der zweiten Hohlwelle 37 über Wälzlager 48 eine fünfte Welle 49 drehbar gelagert. Die fünfte Welle 49 ist durch die vierte Welle 27 über ein als Zahnriemengetriebe ausgebildetes fünftes Getriebe 50 drehend antreibbar. Durch die fünfte Welle 49 ist über ein als Zahnriemengetriebe ausgebildetes sechstes Getriebe 51 eine sechste Welle 52 drehend antreibbar. Die sechste Welle 52 ist über Wälzlager 53 drehbar in einer Buchse 55 eines Kurbelarms 54 gelagert. Die Buchse 55 ist zur Einstellung der Riemenspannung des sechsten Getriebes 51 relativ zu dem Kurbelarm 54 verschiebbar und durch vier Schrauben 56 (Fig. 6) fixierbar, die wiederum in Langlöchern des Kurbelarms 54 aufgenommen sind. Der Kurbelarm 54 ist über Schrauben 57 an der zweiten Hohlwelle 37 befestigt.

Die sechste Welle 52 weist eine zu den Längsachsen 22, 38 parallele dritte Längsachse 58 auf.

Die Spannung des Zahnriemens des fünften Getriebes 50 kann dadurch eingestellt werden, dass vier Schrauben 59 (Fig. 6) gelöst werden, die ein oberes und ein unteres Teil des Gehäuses 28 über Langlöcher miteinander verbinden. Die Langlöcher erstrecken sich in der Längsrichtung des Zahnriemens. Sobald die Riemenspannung durch Verschieben des oberen Teils des Gehäuses 28 eingestellt ist, werden die Schrauben 59 wieder festgezogen.

Am unteren Ende der sechsten Welle 52 ist ein Winkelprofil 60 angeschraubt, an dessen senkrechtem Schenkel ein Basisteil 61 eines Überschiebers 62 mit Schrauben 63 befestigt ist.

In Fig. 4 ist links oben mit einer strichpunktierten Linie eine Oberkante 64 des Transportbands 5 angedeutet.

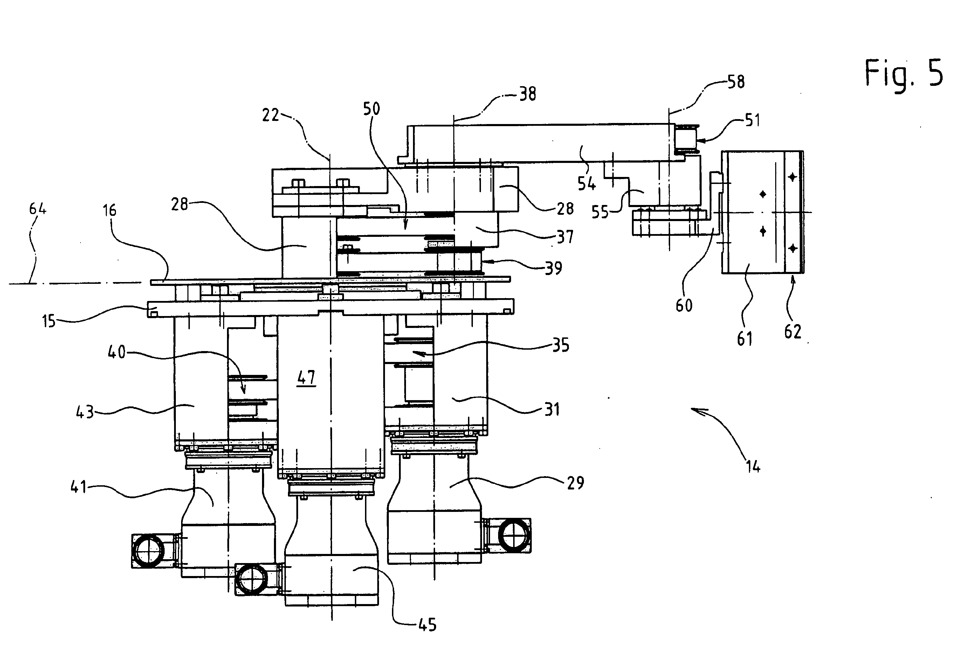

Fig. 5 zeigt weitere Details der Vorrichtung 14 in Seitenansicht. Dabei sind die Antriebseinheiten 29 und 41 und ihre Halterungen 31 und 43 in die Zeichenebene geklappt dargestellt.

Die Figuren 6 bis 15 ergänzen gewissermaßen die Fig. 2 nach oben hin, wobei allerdings das Transportband 5 nicht mehr unten, wie in Fig. 2, sondern oben angeordnet ist.

Die Figuren 6 bis 15 verdeutlichen, dass hier in der zugehörigen Sektion 2 gleichzeitig drei Hohlglasgegenstände 7 hergestellt und anschließend durch einen an sich bekannten, hier aber nicht dargestellten Ausnehmer auf der Absetzplatte 1 abgesetzt werden. Diese drei Hohlglasgegenstände 7 sind in einer Reihe entlang der Mittellinie 3 der Absetzplatte 1 angeordnet Dabei befinden sich die Längsachsen der Hohlglasgegenstände 7 jeweils in dem Ausgangspunkt 8.

Für jeden der drei Hohlglasgegenstände 7 ist an dem Basisteil 61 ein Schubfinger 65 montiert. Üblicherweise ist das freie Ende jedes Schubfingers 65 zur Erleichterung des Überschiebens der Hohlglasgegenstände 7 auf das Transportband 5 leicht zu dem zugehörigen Hohlglasgegenstand 7 hin gekrümmt.

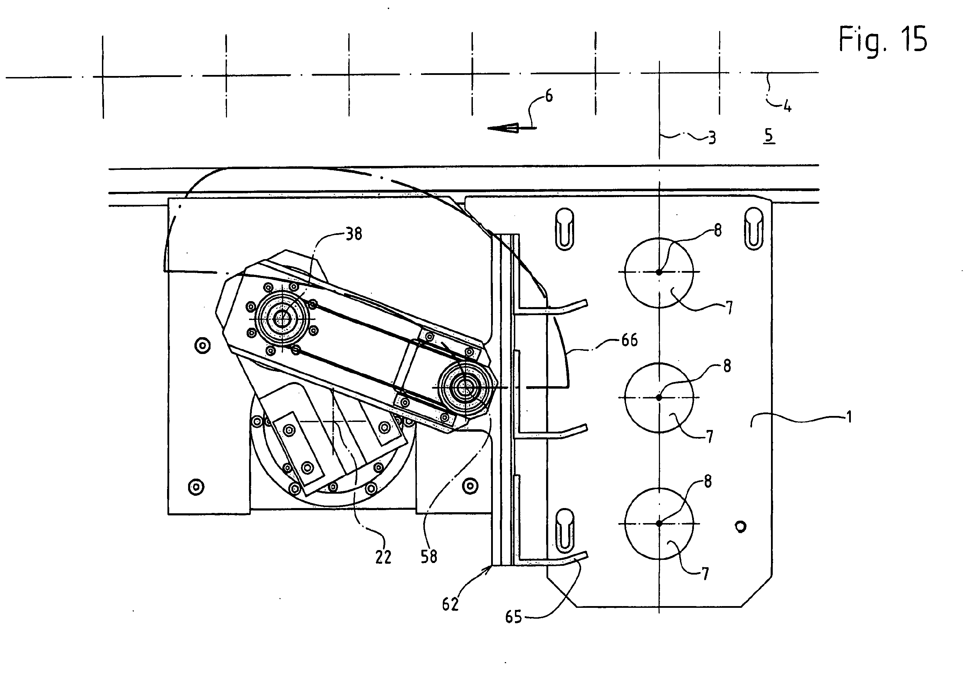

Die Fig. 6 zeigt denjenigen Betriebszustand, in welchem der Überschieber 62 aus seiner Ausgangsstellung gemäß Fig. 15 nach rechts derart bewegt wurde, dass die Schubfinger 65 hinter und in Berührung mit den Hohlglasgegenständen 7 angeordnet sind. Der in Fig. 6 dargestellte Betriebszustand ist also derjenige zu Beginn des eigentlichen Überschiebens. Während dieses Überschiebens soll sich die Längsachse jedes Hohlglasgegenstands 7 auf einer der Bahnkurve 10 gemäß Fig. 1 entsprechenden Bahnkurve bewegen. Um dies zu erreichen, bewegt sich die dritte Längsachse 58 gemäß den Figuren 6 bis 15 auf einer anderen Bahnkurve 66.

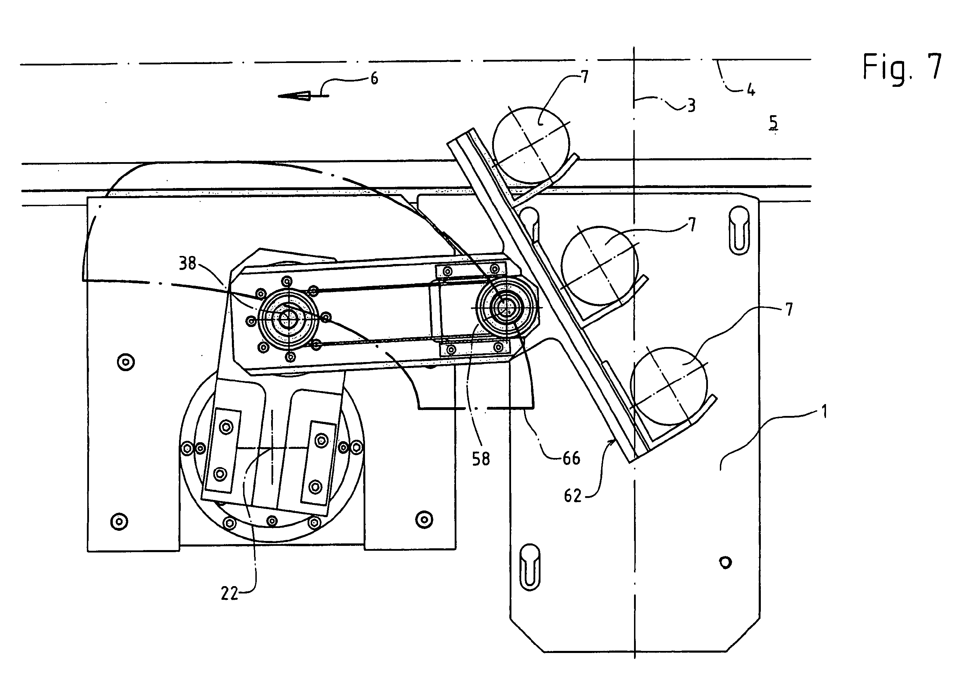

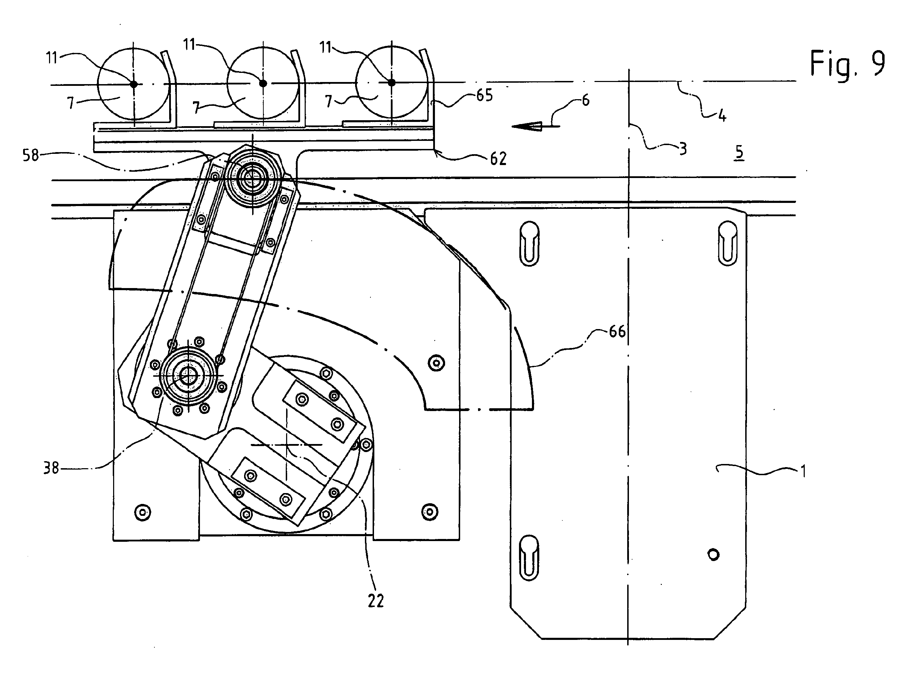

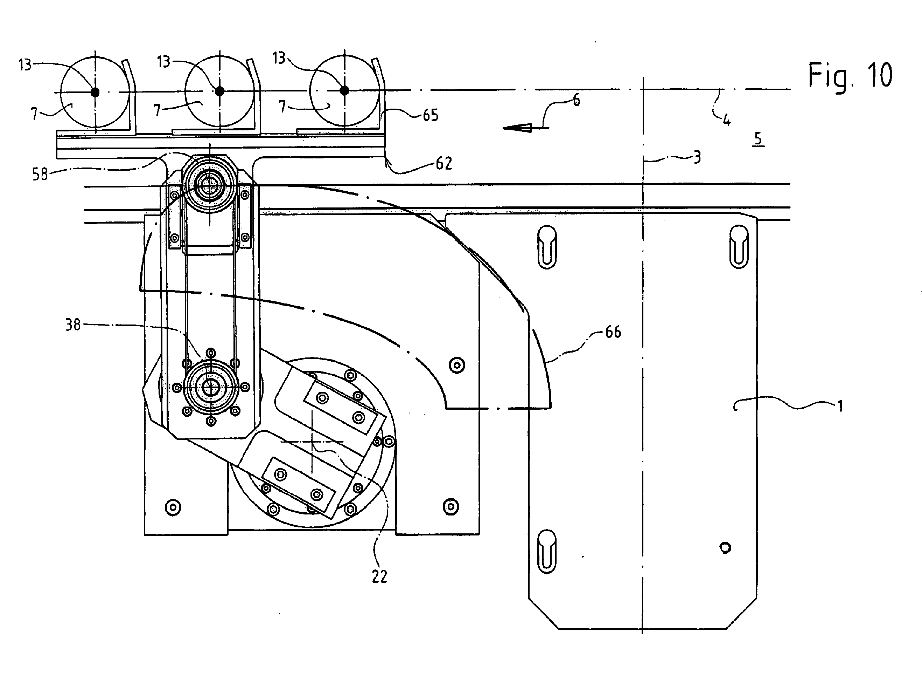

Ausgehend von der Betriebsstellung gemäß Fig. 6 sind in den Figuren 7 bis 15 jeweils die relativen Lagen des Gehäuses 28, des Kurbelarms 54 und des Überschiebers 62 in den Punkten VII bis XV der anderen Bahnkurve 66 dargestellt. Dabei entspricht der Punkt IX der anderen Bahnkurve 66 jeweils dem Berührungspunkt 11 gemäß Fig. 1 (siehe Fig. 9) und der Punkt X der anderen Bahnkurve 66 jeweils dem Lösepunkt 13 gemäß Fig. 1 (siehe Fig. 10).

Die erwähnte Relativstellung des Gehäuses 28, des Kurbelarms 54 und des Überschiebers 62 wird in jedem Punkt der anderen Bahnkurve 66 durch geeignete Ansteuerung der Antriebseinheiten 29, 41, 45 erzielt.

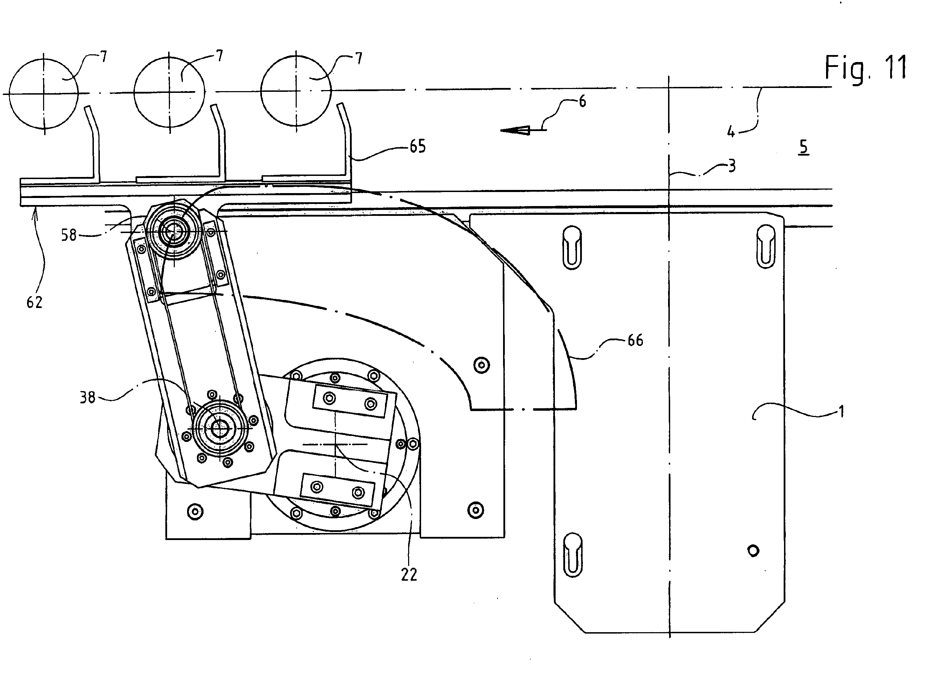

Über diese Ansteuerung lässt sich jede beliebige alternative Bahnkurve 10 für die Hohlglasgegenstände 7 und entsprechend jede alternative Bewegungsbahn für den Überschieber 72 und die Hohlglasgegenstände 7 erzwingen. Ziel ist in allen Fällen, die Hohlglasgegenstände 7 jeweils von ihrem Ausgangspunkt 8 entlang der gekrümmten Bahn 9 (Fig. 1) möglichst schonend bis zu dem Berührungspunkt 11 auf dem Transportband 5 überzuschieben und eventuell bei den Hohlglasgegenständen 7 auf der gekrümmten Bahn 9 auftretende Unruhe durch fortgesetztes formschlüssiges Schieben der Hohlglasgegenstände 7 entlang des linearen Wegstücks 12 zu vermindern oder sogar zu beseitigen. Erst, wenn dies zur Zufriedenheit geschafft ist, werden die Schubfinger 65 gemäß Fig. 11 aus der Reihe der Hohlglasgegenstände 7 auf dem Transportband 5 herausgezogen, ohne dass es zu einer Kollision mit dem jeweils nachfolgenden Hohlglasgegenstand kommen würde. Alle diese Bewegungen des Überschiebers 62 lassen sich durch feinfühlige Ansteuerung der Antriebseinheiten 28 und/oder 41 und/oder 45 sehr genau und reproduzierbar erzielen. So kann für jede Antriebseinheit 29, 41, 45 über den Betriebszyklus für jeden Typ der Hohlglasgegenstände 7 ein Bewegungsprofil programmiert und abgespeichert werden. Diese Programme können bei einem Wechsel des Typs der Hohlglasgegenstände 7 problemlos ebenfalls gewechselt werden.

In dem in den Figuren 6 bis 15 dargestellten Ausführungsbeispiel beträgt z.B. der Schwenkbereich des Gehäuses 28 um die erste Längsachse 22 360⁰, der Schwenkbereich des Kurbelarms 54 um die zweite Längsachse 38 275⁰ und der Schwenkbereich des Überschiebers 62 um die dritte Längsachse 58 115⁰.

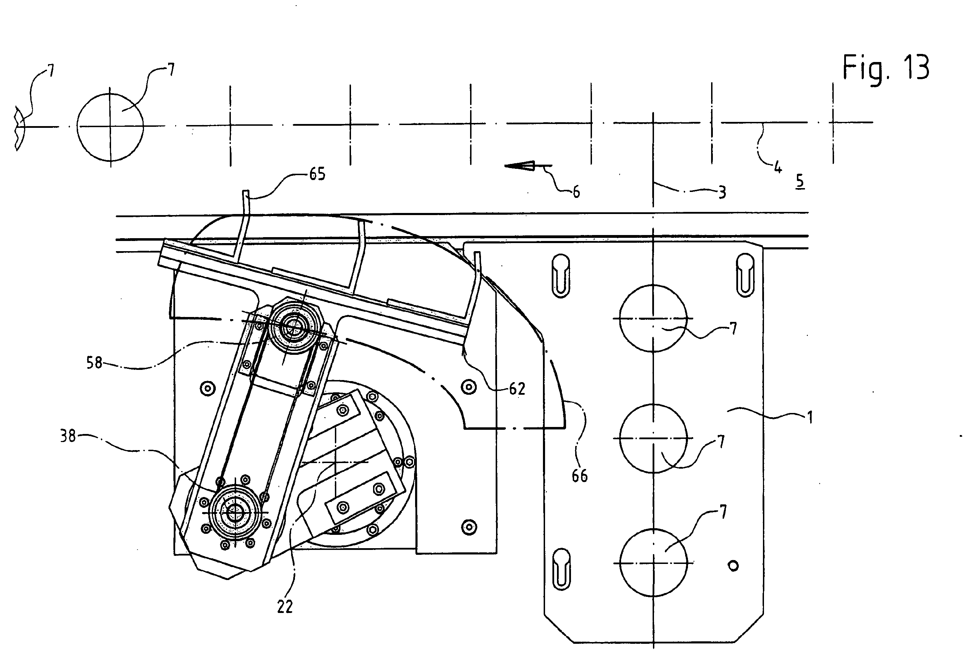

Durch geeignete Ansteuerung der Antriebseinheiten 29, 41, 45 ist auch sichergestellt, dass der Überschieber 62 während seiner Rückkehr von seiner Schiebeendstellung (Fig. 10) in seine Ausgangsstellung gemäß Fig. 15 nicht mit neuen Hohlglasgegenständen 7 kollidiert, die inzwischen schon wieder gemäß den Figuren 13 bis 15 auf der Absetzplatte 1 abgestellt worden sind.

Jede Antriebseinheit 29, 41, 45 kann z.B. einen Elektroservomotor, ggf. mit nachgeschaltetem Untersetzungsgetriebe, aufweisen.

## Patentansprüche

1. Verfahren zum Überschieben wenigstens eines Hohlglasgegenstands (7) von einer Absetzplatte (1) jeder Sektion (2) einer I.S. (Individual Section)-Glasformmaschine auf ein allen Sektionen (2) gemeinsames Transportband (5),
bei dem jeder Hohlglasgegenstand (7) durch einen Überschieber (62) von einem Ausgangspunkt (8) auf der Absetzplatte (1) längs einer gekrümmten Bahn (10) derart auf das Transportband (5) überschoben wird, dass die gekrümmte Bahn (10) tangential an einen Berührungspunkt (11) mit einer Bewegungsrichtung (6) des Transportbands (5) herangeführt wird,
und bei dem der Überschieber (62) anschließend nach Erreichen eines Ablösepunktes (13) zu dem Ausgangspunkt (8) auf der Absetzplatte (1) zur Übernahme des nächsten wenigstens einen Hohlglasgegenstands (7) der Sektion (2) zurückbewegt wird,
**dadurch gekennzeichnet, dass** jeder Hohlglasgegenstand (7) im Anschluss an den Berührungspunkt (11) durch den Überschieber (62) noch um ein lineares Wegstück (12) in der Bewegungsrichtung (6) des Transportbands (5) weitergeschoben wird bis zu einem Lösepunkt (13), in dem der Überschieber (62) von dem Hohlglasgegenstand (7) gelöst wird,

2. Verfahren nach Anspruch 1,
**dadurch gekennzeichnet, dass** beim Überschieben mehrerer Hohlglasgegenstände (7) alle diese Hohlglasgegenstände (7) in ihrem jeweiligen Berührungspunkt (11) miteinander in der Bewegungsrichtung (6) fluchtend angeordnet werden.

3. Vorrichtung (14) zum Überschieben wenigstens eines Hohlglasgegenstands (7) von einer Absetzplatte (1) jeder Sektion (2) einer I.S. (Individual Section)-Glasformmaschine auf ein allen Sektionen (2) gemeinsames Transportband (5),
mit einem Überschieber (62), der ein Basisteil (61) und für jeden überzuschiebenden Hohlglasgegenstand (7) wenigstens einen, sich quer von dem Basisteil (61) erstreckenden Schubfinger (65) aufweist,
mit einer maschinenfest angeordneten ersten Antriebseinheit (29), durch die über ein erstes Getriebe (35) eine maschinenfest drehbar gelagerte erste Hohlwelle (23) mit einer senkrechten ersten Längsachse (22) hin und her drehend antreibbar ist,
wobei mit der ersten Hohlwelle (23) ein Gehäuse (28) verbunden ist,
wobei an dem Gehäuse (28) eine zweite Welle (37) mit einer zu der ersten Längsachse (22) parallelen zweiten Längsachse (38) drehbar gelagert ist,
wobei die zweite Welle (37) über ein zweites Getriebe (39) durch eine dritte Welle (25) drehend antreibbar ist, die dritte Welle (25) konzentrisch zu der ersten Längsachse (22) innerhalb der ersten Hohlwelle (23) drehbar gelagert ist und die erste Hohlwelle (23) durchdringt, und die dritte Welle (25) über ein drittes Getriebe (40) durch eine maschinenfest angeordnete zweite Antriebseinheit (41) drehend antreibbar ist,
wobei mit der zweiten Welle (37) ein Kurbelarm (54) verbunden ist,
und wobei an dem Kurbelarm (54) der Überschieber (62) um eine zu der ersten (22) und zweiten Längsachse (38) parallele dritte Längsachse (58) schwenkbar gelagert ist,
**dadurch gekennzeichnet, dass** die dritte Welle als dritte Hohlwelle (25) ausgebildet ist,
dass konzentrisch zu der ersten Längsachse (22) innerhalb der dritten Hohlwelle (25) eine die dritte Hohlwelle (25) durchdringende vierte Welle (27) drehbar gelagert ist,
dass die vierte Welle (27) über ein viertes Getriebe (44) durch eine maschinenfest angeordnete dritte Antriebseinheit (45) drehend antreibbar ist,
dass durch die vierte Welle (27) über ein fünftes Getriebe (50) eine zu der zweiten Längsachse (38) konzentrische fünfte Welle (49) drehend antreibbar ist,
dass die zweite Welle als zweite Hohlwelle (37) ausgebildet ist und die fünfte Welle (49) innerhalb der zweiten Hohlwelle (37) drehbar gelagert ist und die zweite Hohlwelle (37) durchdringt,
dass durch die fünfte Welle (49) über ein sechstes Getriebe (51) eine sechste Welle (52) drehend antreibbar ist,
dass die sechste Welle (52) koaxial zu der dritten Längsachse (58) angeordnet und an dem Kurbelarm (54) drehbar gelagert ist,
und dass der Überschieber (62) an der sechsten Welle (52) montiert ist.

4. Vorrichtung nach Anspruch 3,
**dadurch gekennzeichnet, dass** jede Antriebseinheit (29;41;45) einen Elektroservomotor aufweist.

5. Vorrichtung nach Anspruch 3 oder 4,
**dadurch gekennzeichnet, dass** jedes Getriebe (35;39;40;44;50;51) als Zahnriemengetriebe ausgebildet ist.

6. Vorrichtung nach Anspruch 5,
**dadurch gekennzeichnet, dass** zur Einstellung der Spannung eines Zahnriemens jedes Zahnriemengetriebes (35;39;40;50;51) eine Halterung (31 ;43;47) jeder Antriebseinheit (29;41;45) in einer Längsrichtung des Zahnriemens einstellbar an einem maschinenfesten Bauteil (15) befestigt ist.

## Claims

1. Process for pushing at least one hollow glass object (7) from a dead plate (1) of each section (2) of an I.S. (individual section) glass forming machine onto a conveyor belt (5) which is common to all sections (2),
wherein each hollow glass object (7) is pushed by a push-off unit (62) from a starting point (8) on the dead plate (1) along a curved path (10) onto the conveyor belt (5) in such a way that the curved path (10) is brought tangentially to a contact point (11) in a movement direction (6) of the conveyor belt (5),
and wherein, after a release point (13) has been reached, the push-off unit (62) is then moved back to the starting point (8) on the dead plate (1) in order to engage the next at least one hollow glass object (7) of the section (2)
**characterized in that** subsequent to the contact point (11) each hollow glass object (7) is pushed further by the push-off unit (62) by a further linear path portion (12) in the movement direction (6) of the conveyor belt (5) as far as a release point (13) in which the push-off unit (62) is released from the hollow glass object (7).

2. Process as claimed in claim 1,
**characterized in that** when pushing off a plurality of hollow glass objects (7) all of these hollow glass objects (7) are disposed aligned with each other in the movement direction (6) at their respective contact point (11).

3. Device (14) for pushing at least one hollow glass object (7) from a dead plate (1) of each section (2) of an I.S. (individual section) glass forming machine onto a conveyor belt (5) which is common to all sections (2),
having a push-off unit (62) which has a base part (61) and, for each hollow glass object (7) to be pushed-off, has at least one pushing finger (65) extending transversely from the base part (61),
having a first drive unit (29) which is disposed in a fixed manner on the machine and by means of which a first hollow shaft (23), which is mounted in a fixed manner on the machine but so as to be able to rotate and has a vertical first longitudinal axis (22), can be rotatably driven in a reciprocating manner via a first gear mechanism (35),
wherein a housing (28) is connected to the first hollow shaft (23),
wherein a second shaft (37) having a second longitudinal axis (38) in parallel with the first longitudinal axis (22) is rotatably mounted on the housing (28),
wherein the second shaft (37) can be rotatably driven by a third shaft (25) via a second gear mechanism (39), the third shaft (25) is rotatably mounted concentric to the first longitudinal axis (22) inside the first hollow shaft (23), and passes through the first hollow shaft (23), and the third shaft (25) can be rotatably driven by a second drive unit (41), which is disposed in a fixed manner on the machine, via a third gear mechanism (40),
wherein a crank arm (54) is connected to the second shaft (37),
and wherein on the crank arm (54) the push-off unit (62) is mounted so as to be able to pivot about a third longitudinal axis (58) in parallel with the first (22) and second longitudinal axis (38),
**characterized in that** the third shaft is formed as a third hollow shaft (25),
that concentric to the first longitudinal axis (22) inside the third hollow shaft (25) a fourth shaft (27) passing through the third hollow shaft (25) is rotatably mounted,
that the fourth shaft (27) can be rotatably driven by a third drive unit (45), which is disposed in a fixed manner on the machine, via a fourth gear mechanism (44),
that by means of the fourth shaft (27) via a fifth gear mechanism (50) a fifth shaft (49), which is concentric to the second longitudinal axis (38), can be rotatably driven,
that the second shaft is formed as a second hollow shaft (37) and the fifth shaft (49) is rotatably mounted inside the second hollow shaft (37) and passes through the second hollow shaft (37),
that a sixth shaft (52) can be rotatably driven by the fifth shaft (49) via a sixth gear mechanism (51),
that the sixth shaft (52) is disposed coaxial to the third longitudinal axis (58) and is rotatably mounted on the crank arm (54),
and that the push-off unit (62) is mounted on the sixth shaft (52).

4. Device as claimed in claim 3,
**characterized in that** each drive unit (29;41;45) has an electric servo motor.

5. Device as claimed in claim 3 or 4,
**characterized in that** each gear mechanism (35;39;40;44;50;51) is formed as a toothed belt gear mechanism.

6. Device as claimed in claim 5,
**characterized in that** in order to adjust the tension of a toothed belt of each toothed belt gear mechanism (35;39;40;50;51) a holding device (31;43;47) of each drive unit (29;41;45) is attached to a component (15), which is fixed to the machine, in such a way as to be adjustable in a longitudinal direction of the toothed belt.

## Revendications

1. Procédé pour transférer au moins un objet en verre creux (7) depuis un plateau de pose (1) de chaque section (2) d'une machine sectionnelle de mise en forme du verre vers une bande transporteuse (5) commune à toutes les sections (2),
dans lequel chaque objet en verre creux (7) est transféré par un élément de transfert (62) depuis un point de départ (8) sur le plateau de pose (1) le long d'une trajectoire courbe (10) vers la bande transporteuse (5), de telle sorte que la trajectoire courbe (10) est amenée tangentiellement à un point de contact (11) avec une direction de défilement (6) de la bande transporteuse (5),
et dans lequel l'élément de transfert (62), après avoir atteint un point de désolidarisation (13), est ensuite renvoyé vers le point de départ (8) sur le plateau de pose (1) pour saisir ledit au moins un objet en verre creux (7) suivant de la section (2),
**caractérisé en ce que** chaque objet en verre creux (7) est encore déplacé par l'élément de transfert (62) dans le prolongement du point de contact (11) sur un tronçon de trajectoire linéaire (12) dans la direction de défilement (6) de la bande transporteuse (5) jusqu'à un point de désolidarisation (13), dans lequel l'élément de transfert (62) est détaché de l'objet en verre creux (7).

2. Procédé selon la revendication 1,
**caractérisé en ce que**, lors du transfert de plusieurs objets en verre creux (7), tous ces objets en verre creux (7) dans leur point de contact (11) respectif sont alignés les uns aux autres dans la direction de défilement (6).

3. Dispositif (14) destiné à transférer au moins un objet en verre creux (7) depuis un plateau de pose (1) de chaque section (2) d'une machine sectionnelle de mise en forme du verre vers une bande transporteuse (5) commune à toutes les sections (2),
comportant un élément de transfert (62), qui comporte une partie de base (61) et pour chaque objet en verre creux (7) à transférer au moins un doigt de poussée (65) orienté transversalement à la partie de base (61),
comportant une première unité d'entraînement (29), solidaire de la machine, par laquelle un premier arbre creux (23), monté rotatif et solidaire de la machine et avec un premier axe longitudinal (22) vertical, peut être actionné en rotation en va-et-vient par l'intermédiaire d'un premier engrenage (35),
un carter (28) étant relié au premier arbre creux (23),
un deuxième arbre (37) avec un deuxième axe longitudinal (38 parallèle au premier axe longitudinal (22) étant monté rotatif sur le carter (28),
le deuxième arbre (37) pouvant être entraîné en rotation par un troisième arbre (25) par l'intermédiaire d'un deuxième engrenage (39), ledit troisième arbre (25) est monté rotatif concentriquement au premier axe longitudinal (22) à l'intérieur du premier arbre creux (23) et passe à travers le premier arbre creux (23), et ledit troisième arbre (25) peut être entraîné en rotation par une deuxième unité d'entraînement (41) solidaire de la machine, par l'intermédiaire d'un troisième engrenage (40),
une manivelle de volant (54) étant reliée au deuxième arbre (37),
et l'élément de transfert (62) étant monté sur la manivelle de volant (54) de manière à pouvoir pivoter autour d'un troisième axe longitudinal (58) parallèle au premier (22) et au deuxième axe longitudinal (38),
**caractérisé en ce que** le troisième arbre est réalisé sous la forme d'un troisième arbre creux (25),
**en ce qu'**un quatrième arbre (27), passant à travers le troisième arbre creux (25), est monté rotatif concentriquement au premier axe longitudinal (22) à l'intérieur du troisième arbre creux (25),
**en ce que**, par l'intermédiaire d'un quatrième engrenage (44), le quatrième arbre (27) peut être entraîné en rotation par une troisième unité d'entraînement (45) solidaire de la machine,
**en ce qu'**un cinquième arbre (49), concentrique au deuxième axe longitudinal (38), peut être entraîné en rotation par le quatrième arbre (27) par l'intermédiaire d'un cinquième engrenage (50),
**en ce que** le deuxième arbre est réalisé sous la forme d'un deuxième arbre creux (37) et le cinquième arbre (49) est monté rotatif à l'intérieur du deuxième arbre creux (37) et passe à travers le deuxième arbre creux (37),
**en ce qu'**un sixième arbre (52) peut être entraîné en rotation par le cinquième arbre (49) par l'intermédiaire d'un sixième engrenage (51),
**en ce que** le sixième arbre (52) est disposé coaxialement au troisième axe longitudinal (58) et est monté rotatif sur la manivelle de volant (54),
et **en ce que** l'élément de transfert (62) est monté sur le sixième arbre (52).

4. Dispositif selon la revendication 3,
**caractérisé en ce que** chaque unité d'entraînement (29 ; 41 ; 45) comporte un servomoteur électrique.

5. Dispositif selon la revendication 3 ou 4,
**caractérisé en ce que** chaque engrenage (35 ; 39 ; 40 ; 44 : 50 : 51) est réalisé sous la forme d'une transmission à courroie dentée.

6. Dispositif selon la revendication 5,
**caractérisé en ce que** pour le réglage de la tension d'une courroie dentée de chaque engrenage (35 ; 39 ; 40 ; 50 ; 51), un support (31 ; 43 ; 47) de chaque unité d'entraînement (29 ; 41 ; 45) est fixé, de manière réglable dans une direction longitudinale de la courroie dentée, sur un élément (15) solidaire de la machine.
